# FASCICULE DE BREVET EUROPEEN

(11) **EP 4 306 396 B1**
(45) Date de publication et mention de la délivrance du brevet: **31.12.2025**
(21) Numéro de dépôt: 23180099.6
(22) Date de dépôt: 19.06.2023
(51) Int. Cl.: B62J 17/08, B62J 27/30

(54) **STRUCTURE PIVOTANTE DE PROTECTION DES PASSAGERS D'UN VÉHICULE**
SCHWENKBARE SCHUTZSTRUKTUR VON FAHRZEUGINSASSEN
PIVOTING PROTECTION STRUCTURE OF VEHICLE PASSENGERS

(30) Priorité: 12.07.2022 BE 202205563
(43) Date de publication de la demande: 17.01.2024
(73) Titulaire: Bike43, 1180 Uccle (BE)
(72) Inventeur: RICHELLE, Etienne, 1150 Bruxelles (BE)
(74) Mandataire: Kirkpatrick

(56) Documents cités:
- WO-A1-2004/039658
- DE-A1- 10 227 166
- FR-A1- 2 649 064
- FR-A1- 2 900 630
- JP-A- 2020 075 589
- TW-B- I 630 138

## Description

L'invention présente une solution visant à améliorer la sécurité des passagers (conducteur possiblement inclus) d'un vélo ou vélo à assistance électrique, tout en facilitant leur installation sur le porte bagage dudit vélo.

Par exemple , le document WO 2004/039658 A1 divulgue une structure de protection du conducteur d'un vélo, ladite structure étant agencée pivotante entre une position ouverte d'installation de passager et une position fermée de roulage, ladite structure comprenant un arceau, qui en position de roulage entoure au moins le passager, et, équipée d'au moins un moyen de verrouillage agencé pour s'enclencher lorsque la structure de protection est en position de roulage, et pour ne se déverrouiller que par une action manuelle sur les moyens de verrouillage.

Il existe des vélos cargos de type « rallongé » ou « longtail », avec ou sans assistance électrique, ou moto sans pédales, ayant une ou deux roues arrières, permettant le transport de passagers derrière le conducteur. Cette solution est largement utilisée pour le transport d'enfants assis sur le porte bagage et sécurisés par un arceau, appellée communément « monkey bars » ou « roller coaster » ou encore « barre latérales » suivant les marques.

Cette structure est fixe, boulonnée sur le porte bagage. Les passagers, souvent des enfants, doivent être porté par le parent ou enjamber la structure, ce qui est difficile car elle est relativement haute, typiquement à environ 60-70cm du sol. Des marchepieds sont prévus sur les côtés du véhicule mais s'installer sur le porte bagage reste difficile. Parfois les enfants passent entre le porte bagage et la structure.

### Description de l'invention :

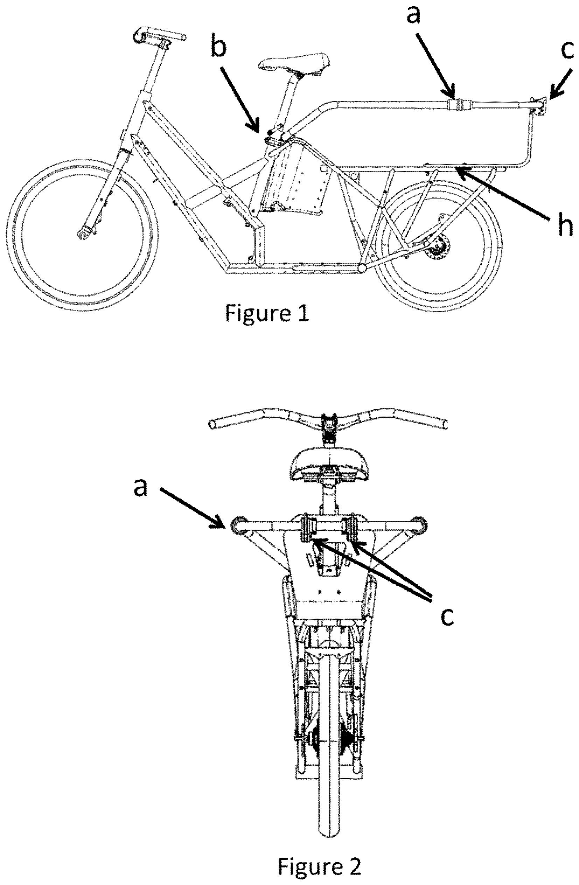

L'invention propose une solution permettant à l'arceau, i.e. la structure de protection de pivoter afin de dégager les côtés du porte bagage pour que les passagers s'y installent aisément dans une première position, puis de pivoter pour se remettre en position de roulage dans une seconde position, qui peut être verrouillable (c sur les figures 1 à 3), et qui joue alors son rôle de protection latérale en cas d'impact ou de chute du vélo.

L'invention concerne donc une structure de protection des passagers d'un vélo avec ou sans assistance électrique, à une ou deux roues arrières, ladite structure étant agencée pivotante afin de faciliter l'installation des passagers sur le porte bagage du vélo.

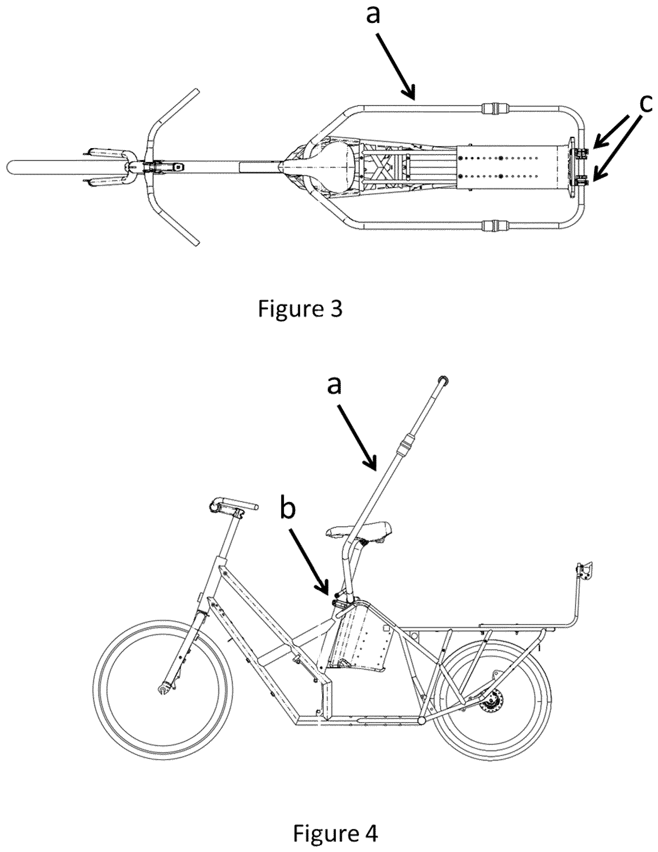

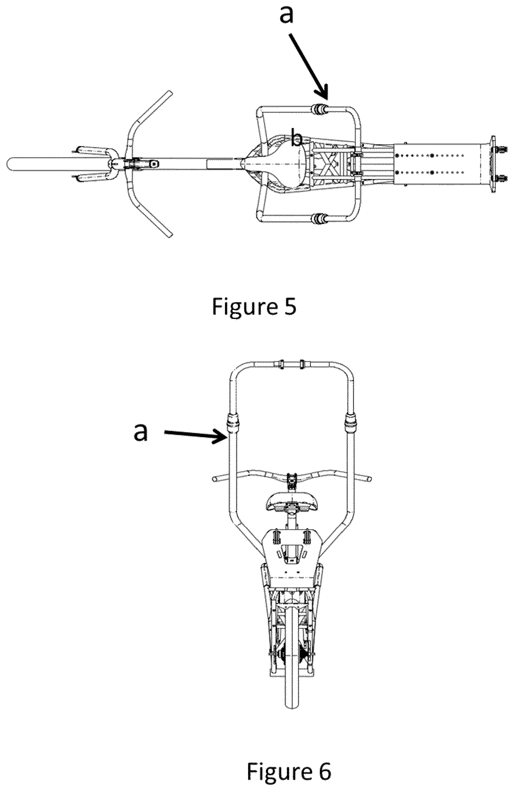

La structure est agencée pivotante entre une position ouverte d'installation de passager et une position fermée de roulage. Dans un mode de réalisation, la structure est agencée pivotante vers l'avant, c'est-à-dire que la structure est reliée au véhicule au niveau de moyens de pivots positionnés devant le ou les passagers. Il est par exemple installé au niveau de la selle d'un vélo, voire au niveau du guidon pour inclure le conducteur (figures 4, 5 et 6).

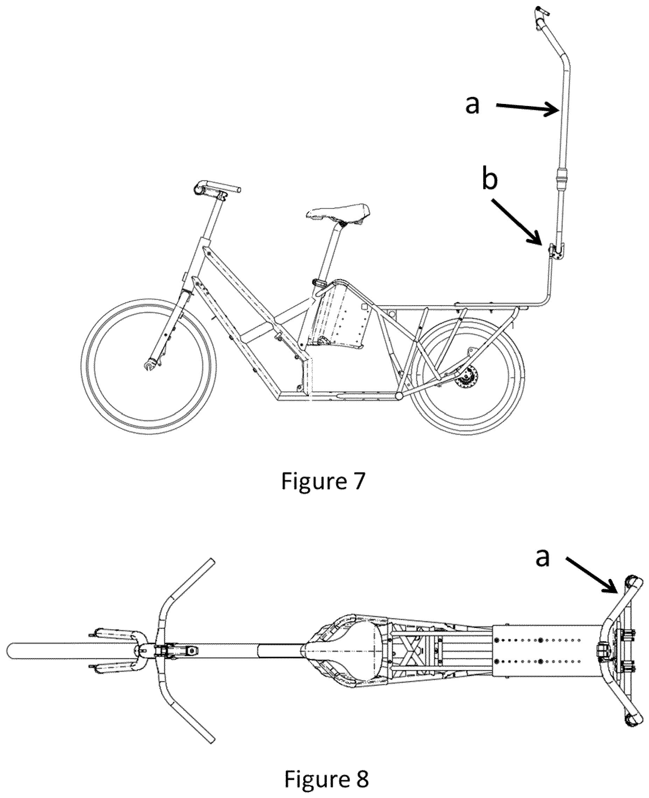

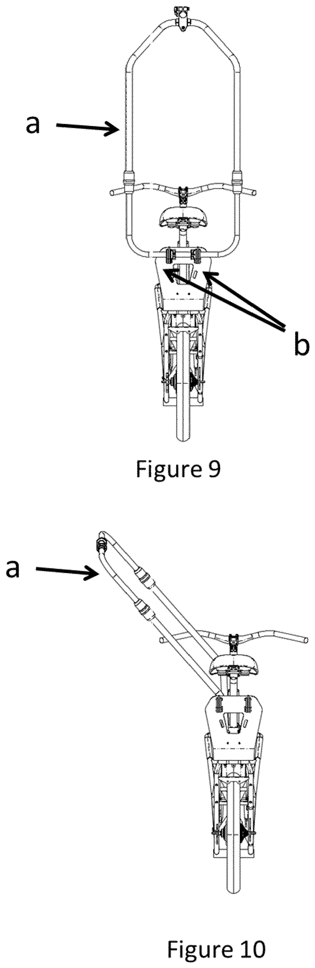

Dans un autre modèle de réalisation, la structure est agencée pivotante vers l'arrière, c'est-à-dire que la structure est reliée au véhicule au niveau de moyens de pivots positionnés derrière le ou les passagers (figures 7, 8 et 9).

Alternativement, les moyens de pivots peuvent être positionnés latéralement.

La structure est un arceau qui, en position de roulage entoure au moins le ou les passagers. Il peut également entourer le conducteur.

La structure comprend des moyens de verrouillage en position fermée, de façon à sécuriser le passager pendant le transport. Ces moyens de verrouillage sont réversibles.

De préférence, les moyens de verrouillage sont conformés pour s'activer automatiquement lors de la descente de l'arceau. Par sécurité, ils sont agencés pour ne se déverrouiller que par action manuelle (de l'utilisateur) sur ledit moyen de verrouillage.

Les moyens de verrouillage comprennent par exemple un système de gâche agencé pour engager l'arceau en position fermée.

De préférence, la gâche est conformée de façon à s'ouvrir automatiquement lorsque l'arceau de la structure de protection appuie sur celle-ci. La gâche a par exemple une surface supérieure oblique (non horizontale) telle qu'une pression verticale sur cette face supérieure entraine l'ouverture de la gâche et l'introduction de l'arceau dans la gâche entraine la fermeture de celle-ci.

Les moyens de verrouillage peuvent aussi ou alternativement comprendre par exemple une boucle clipsée, une boucle aimantée et/ou un mousqueton.

La structure de protection peut également comprendre une capote, composée d'une structure de capote au moins partiellement rigide, formant un volume tel que le ou les passagers soient dans le volume défini par cette structure en position de roulage. La structure peut par exemple être au moins en partie en aluminium.

La structure de la capote s'appuie de préférence sur l'arceau de la structure de protection. Elle est de préférence fixée à la structure (à l'arceau) par des moyens démontables avec ou sans outil (n) .

De préférence, la structure de la capote comprend au moins deux montants avant rigides, qui peuvent être reliés entre eux à leur sommet par une traverse. Dans un mode de réalisation préférée, la structure de la capote comprend également deux montants arrières. Ceux-ci peuvent être rigides comme les montants avant ou en matériau plus flexible, comme par exemple en fibre de verre. Cette flexibilité permet à la structure de la capote d'avoir une marge de déformation, notamment en cas vent latéral, et de réduire l'angle d'incidence de la capote par rapport au vent apparent. L'avant de la structure est rigide afin de se comporter comme un bord d'attaque, l'arrière seul peut pivoter/fléchir.

De préférence, les extrémités supérieures des montants sont reliées entre elles de façon à former une courbe fermée formant le ciel de la capote.

La capote comprend également une couverture, recouvrant au moins en partie la structure de la capote. La couverture est de préférence imperméable à l'eau. La couverture de la capote peut être transparente, ou semi-transparente.

La couverture de la capote peut s'étendre au-delà de la structure de la capote, c'est-à-dire plus bas (plus bas que l'arceau) afin de protéger les jambes des passagers.

De préférence, la couverture de la capote ne recouvre pas les moyens de verrouillage, pour ne pas en restreindre l'accès.

Lorsque la structure de protection n'englobe pas le cycliste, il peut être envisagé que la capote comprenne des moyens d'extension au-dessus du cycliste, par exemple par extension du ciel de la capote, afin de le protéger de la pluie par exemple.

La couverture peut comprendre une ouverture, de préférence refermable sur la face avant de la capote, agencée permettre le passage de la selle lors de l'ouverture de de la structure, en particulier quand le pivot de la structure de protection est placé devant le passager, par exemple sur le montant de la selle.

La structure est de préférence destinée à un vélo. L'invention concerne donc également l'utilisation de la structure de protection sur un vélo.

L'invention sera mieux comprise à l'aide de la description de plusieurs modes de réalisation en rapport au dessin sur lequel :
La Figure 1 est une vue de côté d'un vélo sur lequel est placé une structure selon l'invention, la structure étant un arceau protégeant les passagers, en position en roulage.
La Figure 2 est une vue arrière de l'arceau de la figure 1
La Figure 3 est une vue de haut de l'arceau de la figure 1.
La Figure 4 est une vue de côté de l'arceau de la figure 1, en position ouverte après pivotement vers l'avant.
La Figure 5 est une vue de haut de l'arceau de la figure 4.
La Figure 6 est une vue arrière de l'arceau de la figure 4.
La Figure 7 est une vue de côté d'un vélo sur lequel est placé une autre structure selon l'invention, la structure étant un arceau protégeant les passagers, en position ouverte après avoir pivoté vers l'arrière.
La figure 8 est une vue de haut de l'arceau de la figure 7 ;
La Figure 9 est une vue arrière de l'arceau de la figure 7 ;
La Figure 10 est une vue arrière d'un vélo sur lequel est placé une autre structure selon l'invention, la structure étant un arceau protégeant les passagers, pivoté sur le côté.
La Figure 11 est une vue de côté d'un vélo sur lequel est placé une autre structure selon l'invention, la structure étant un arceau protégeant les passagers et le conducteur, en position en roulage.
La Figure 12 est une vue de côté de l'arceau de la figure 11 après pivotement vers l'avant.
La Figure 13 est une vue en perspective d'un moyen de pivot agencé sur le cadre d'un vélo, sous la selle ;
La Figure 14 est un agrandissement du moyen de pivot de la figure 13
La Figure 15 est une vue en perspective d'un moyen de verrouillage de l'arceau
La Figure 16 est un agrandissement du moyen de verrouillage de l'arceau de la figure 15 en position verrouillée ;
La Figure 17 illustre les moyens de verrouillage de l'arceau de la figure 15, en position déverrouillée ;
La Figure 18 est une vue Eclatée du moyen de verrouillage de l'arceau des figures 15 à 17 ;
La Figure 19 est une vue en perspective d'un vélo sur lequel est installé un arceau de protection selon l'invention, en position fermée, i.e. opérationnelle
La Figure 20 est une vue du vélo de la figure 19, sur laquelle l'arceau est en position ouverte
La Figure 21 illustre un vélo comprenant une structure de protection selon l'invention, avec une capote en position fermée;
La Figure 22 illustre vélo de la figure 21 sur laquelle la capote est ouverte.

En référence à la figure 1, une structure de protection selon l'invention comprend un arceau a articulé au niveau du cadre du vélo, sur la tige de la selle, à l'aide d'un moyen de pivot b. Ici, un moyen de verrouillage c est prévu à l'arrière de l'arceau en coopération avec un support h installé sur le porte bagage du vélo. Les mêmes références sont reprises pour les mêmes éléments, pour les autres modes de réalisation.

Le(s) moyen(s) de pivot (b sur les figures 1, 4, 7 et 9) peuvent être disposés à l'avant de la structure, à l'arrière, ou encore sur les côtés de celle-ci.

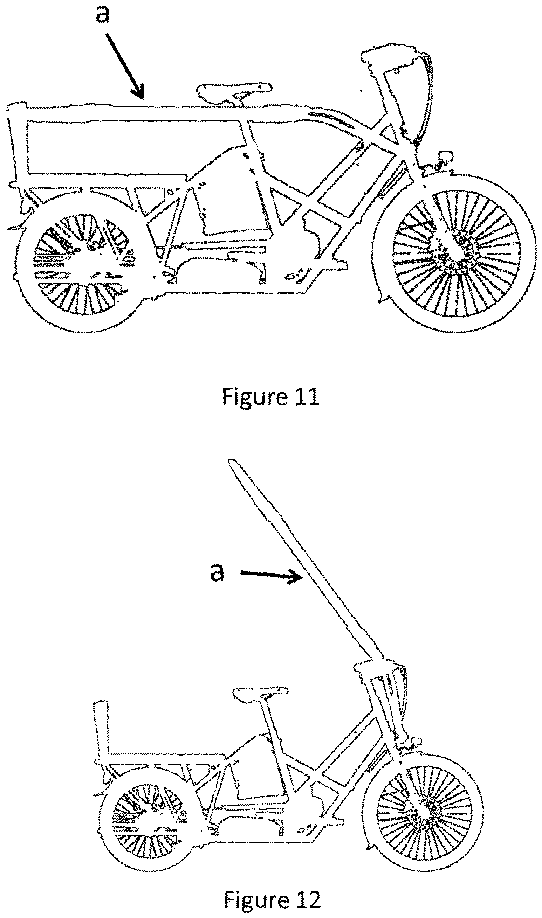

L'arceau peut inclure le conducteur, comme illustré aux figures 11 et 12.

Ce système peut être installé sur un vélo avec ou sans assistance électrique, à 2, 3 ou 4 roues.

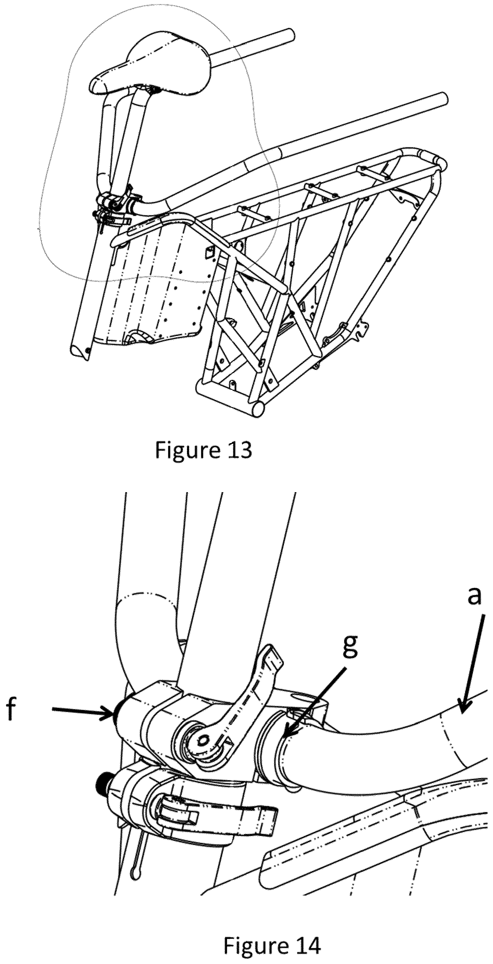

Un exemple de moyen de pivot (b) est présenté aux figures 13 et 14. Une pièce (f sur la figure 14) ressemblant à une potence de guidon est fixée solidement à la tige de selle. La partie arrière de la pièce maintient, sans le bloquer en rotation, un palier (g sur la figure 14) fixé au tube de la structure pivotante (a), en permettant ainsi le pivotement.

La structure comprend des moyens de verrouillage visant à la maintenir fermement et solidaire du véhicule afin d'en protéger les passagers en cas d'impact ou de chute.

Le(s) moyen(s) de verrouillage sont disposés de préférence sur le côté de la structure opposé à celui contenant le(s) moyen(s) de pivot.

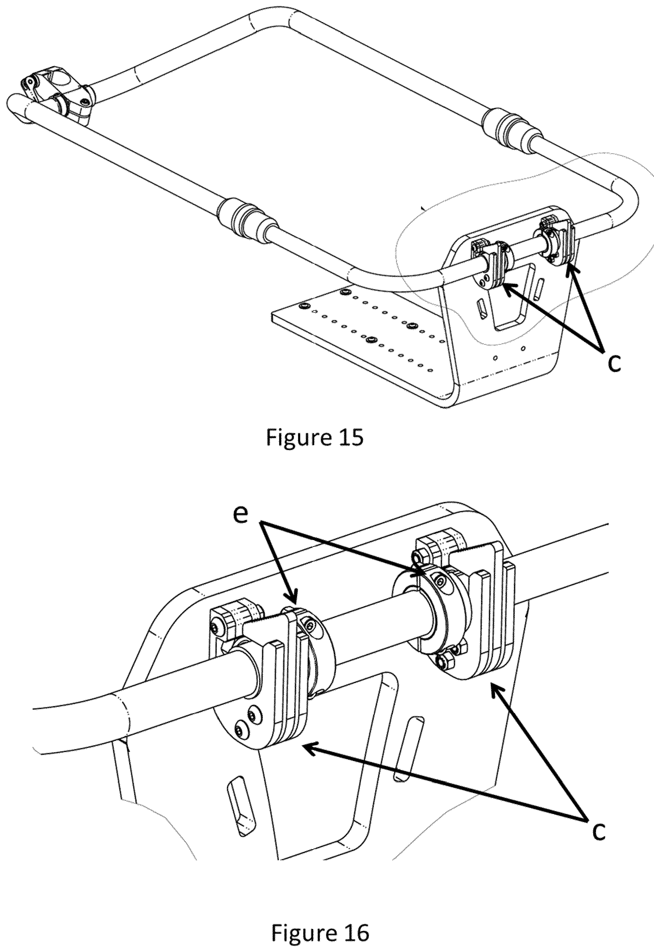

Un exemple de moyen de verrouillage (c) est présenté aux la figure 15 et 16 en position verrouillée, et 17 en position déverrouillée permettant ainsi le basculement de la structure (a).

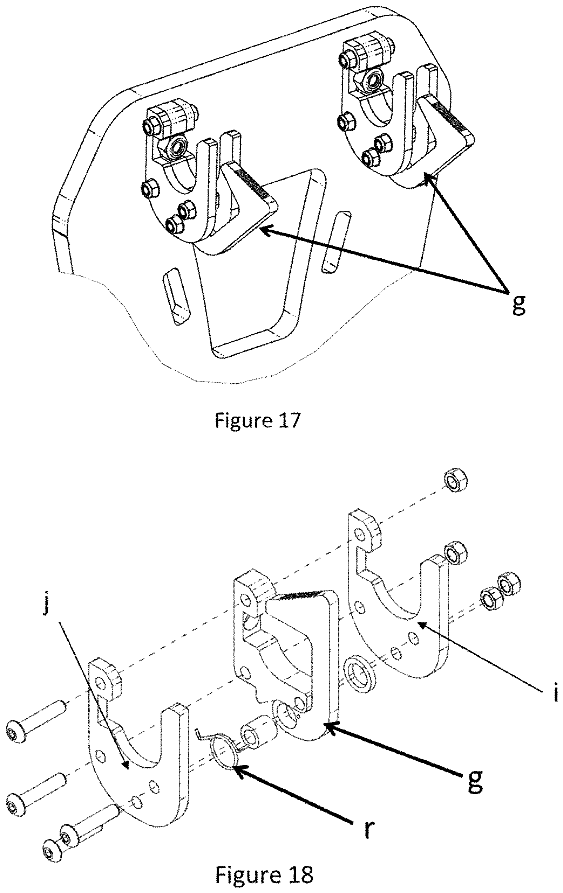

Le verrouillage permet de sécuriser la structure pivotante (a) afin de l'empêcher de s'ouvrir grâce à une gâche (g sur les figures 17 et 18). Le ressort de rappel (r sur la figure 18) assure la fermeture automatique de la gâche dès que la structure est en position fermée pour le roulage du véhicule. Le ressort est fixé à la gâche et s'appuie sur la partie fixe du moyen de verrouillage.

Comme illustré en figure 18, la gâche est conformée de façon à s'ouvrir automatiquement lorsque le tube de la structure de protection appuie sur celle-ci. La gâche a per exemple une surface supérieure oblique (non horizontale) telle qu'une pression verticale sur cette face supérieure entraine le pivotement du loquet de la gâche vers l'extérieur, en position ouverte. L'introduction de l'arceau dans la gâche entraine alors le mouvement inverse du loquet et referme la gâche. Ainsi, une intervention manuelle n'est pas forcément nécessaire pour pivoter la gâche. Le tube descend ensuite au fond des pièces d'accueil (i) et (j), sur la figure 18. Ensuite, le ressort de rappel (r) ramène la gâche dans sa position de repos, et la partie se situant au-dessus du tube en bloque le mouvement vers le haut.

Le mouvement vers le haut du tube, c'est-à-dire l'ouverture de la structure de protection, n'est ensuite possible qu'en ouvrant la gâche manuellement en la basculant. Ceci permet par exemple de soulever le vélo en le tenant par la structure (a) de protection sans qu'elle ne s'ouvre.

Alternativement, des variantes où la gâche serait absente et dans lesquelles le blocage du mouvement vers le haut serait réalisé par un moyen séparé, comme une boucle clipsée, ou aimantée ou un mousqueton est également possible. Dans ce cas, la gâche (g) est retirée et la structure ne se verrouille pas d'elle-même, elle vient se poser au fond des pièces d'accueil (i) et (j), puis l'utilisateur bloque le mouvement vers le haut dans une manipulation séparée.

Une autre variante basée sur le système présenté en Figure 17 est possible dans laquelle un moyen de blocage en ouverture de la gâche (g) serait installé, comme une goupille. L'utilisateur doit manuellement retirer ce verrouillage pour pouvoir basculer la gâche et basculer la structure. Il s'agit d'une sécurité supplémentaire pour s'assurer que la structure est bien bloquée en position fermée et ne s'ouvrira pas si par exemple le ressort de rappel ( r ) était cassé ou inopérant.

Une ou des butée(s) (e sur la figure 16) solidaire(s) de la structure pivotante (a) reprend (-nent) tout effort latéral (transversal par rapport au plan du vélo) exercé sur la structure pivotante. Ces butées s'appuient sur le(s) système(s) de verrouillage (c sur la figure 16) solidaire du véhicule.

D'autres moyens de verrouillages sont possibles, leur rôle étant de maintenir l'arceau (a) fermement en place solidairement du véhicule lors du roulage afin de protéger les passagers en cas d'impact ou de chute.

Une capote de protection contre le vent la pluie peut être fixée à l'arceau de sécurité. Elle bascule avec la structure afin de permettre aux passagers de s'installer.

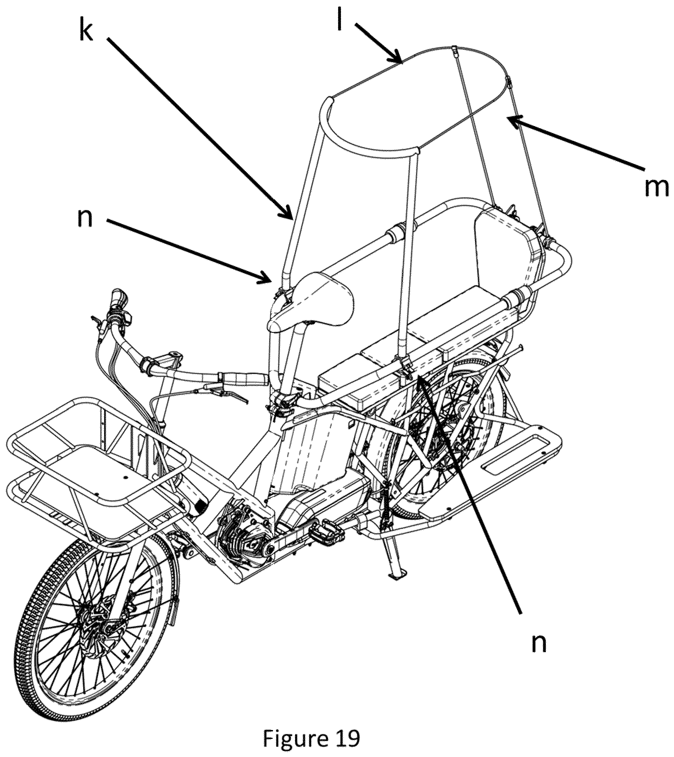

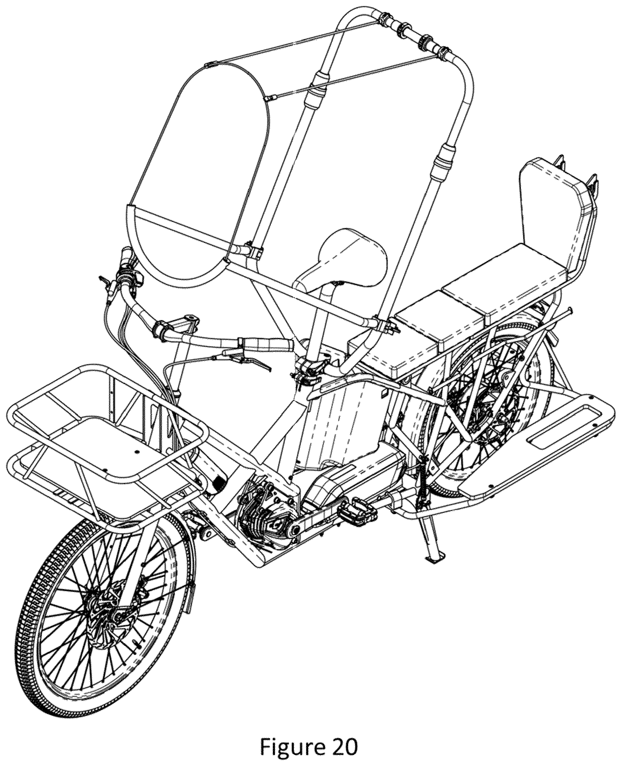

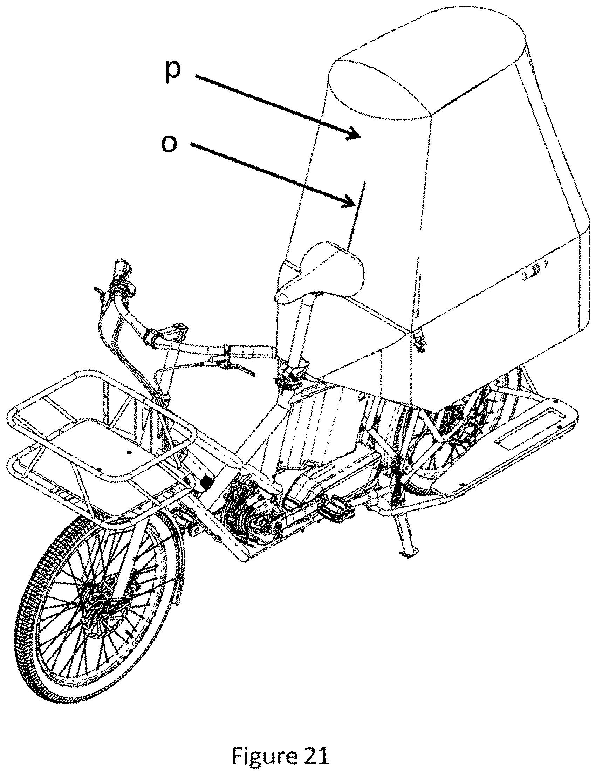

En référence aux figures 19 à 22, la capote est composée d'une structure au moins partiellement rigide k, s'appuyant sur l'arceau de la structure de protection, de façon à ce que le passager soit dans le volume défini par cette structure. Elle peut par exemple être au moins en partie en aluminium s'appuyant sur l'arceau de la structure de protection, plutôt vers l'avant et fixée à la structure (à l'arceau) par un moyen démontable avec ou sans outil(n). Ici, deux montants avant rigides sont reliés entre eux à leur sommet par une traverse incurvée, les montants et la traverse étant par exemple rigide en aluminium. La partie supérieure (l) prolongeant la traverse incurvée pour former une courbe fermée, et les deux montants arrières (m) de la structure sont réalisée dans un matériau plus flexible, comme des baguettes en fibre de verre. Cela permet à la structure de la capote d'avoir une marge de déformation, notamment en cas vent latéral, et de réduire l'angle d'incidence de la capote par rapport au vent relatif. L'avant de la structure est rigide afin de se comporter comme un bord d'attaque, l'arrière seul peut pivoter.

La capote comprend également une couverture p, de préférence imperméable à l'eau, qui s'appuie sur la structure. La couverture peut par exemple être un textile imperméabilisé ou en matériau plastique.

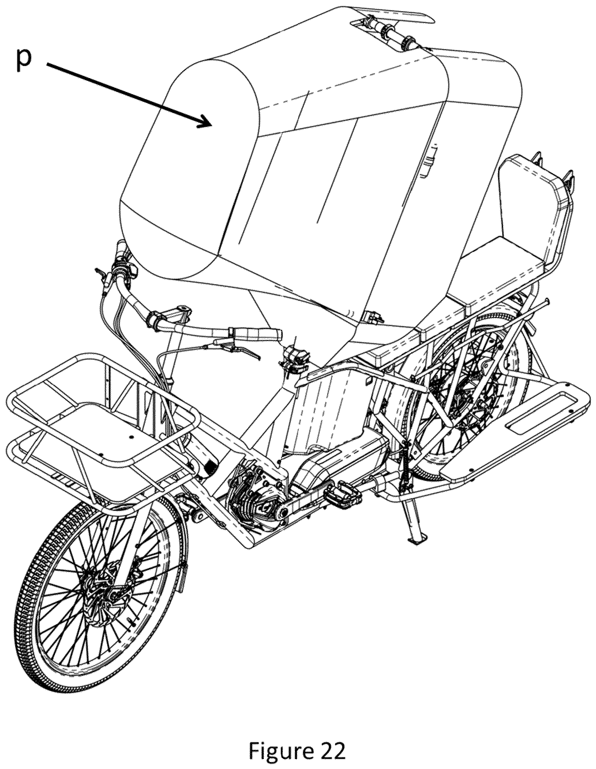

Une ouverture (o), ici une fente, peut être prévue sur la face avant de la capote, c'est-à-dire la face proche de la selle, afin que la selle puisse traverse ladite face avant lors du basculement vers l'avant de la capote lors de l'ouverture de la structure de protection, comme illustré sur la figure 22. Cette ouverture peut par exemple se refermer par une tirette, un rabat aimanté ou un rabat avec velcro.

La couverture peut s'étendre au-delà de la surface délimitée par l'arceau et la structure de la capote, afin de protéger également les jambes du ou des passagers. De préférence, les moyens de verrouillage ne sont pas recouverts par la couverture, afin de les laisser libre d'accès.

## Revendications

1. Structure de protection (a) des passagers installés sur le porte bagage d'un vélo avec ou sans assistance électrique, à une ou deux roues arrières, ladite structure étant agencée pivotante entre une position ouverte d'installation de passager et une position fermée de roulage, ladite structure comprenant un arceau, qui en position de roulage entoure au moins le ou les passagers , et, équipée d'au moins un moyen de verrouillage agencé pour s'enclencher lorsque la structure de protection est en position de roulage, et pour ne se déverrouiller que par une action manuelle sur les moyens de verrouillage.

2. Structure de protection selon la revendication 1, agencée pivotante vers l'avant et comprenant des moyens de pivot positionnés devant le ou les passagers.

3. Structure selon la revendication 1, agencée pivotante vers l'arrière, et comprenant des moyens de pivot positionnés derrière le ou les passagers.

4. Structure selon la revendication 1, agencée pivotante latéralement et comprenant des moyens de pivots positionnés sur le côté du passager.

5. Structure selon l'une des revendications précédentes, dans laquelle l'arceau, en position de roulage, entoure également le conducteur.

6. Structure de protection selon l'une des revendications précédentes, dans laquelle les moyens de verrouillage comprennent une gâche, une boucle clipsée, une boucle aimantée et/ou un mousqueton.

7. Structure de protection (a) selon n'importe laquelle des revendications précédentes et sur laquelle est fixée une capote qui pivote avec elle.

8. Structure de protection selon la revendication 7, dont la capote comprend une structure de capote ayant au moins deux montants avant rigides et une couverture couvrant au moins en partie la structure de capote.

9. Structure de protection selon la revendication 8, dans laquelle les deux montant avant rigides sont reliés entre eux à leur sommet par une traverse.

10. Structure de protection selon la revendication 8 ou 9, dans laquelle la structure de la capote comprend également des parties arrières en matériau plus flexible.

11. Structure de protection selon l'une des revendication 7 à 10, dans laquelle la couverture comprend une fente, de préférence refermable, sur la face avant de la capote.

12. Structure de protection (a) selon n'importe laquelle des revendications précédentes installée sur un véhicule à deux roues.

## Patentansprüche

1. Schutzstruktur (a) für Passagiere, die auf dem Gepäckträger eines Fahrrads mit oder ohne elektrische Unterstützung, mit einem oder zwei Hinterrädern installiert sind, wobei die Struktur zwischen einer offenen Installationsposition der Passagiere und einer geschlossenen Position für die Fahrt schwenkbar angeordnet ist, wobei genannte Struktur einen Bügel umfasst, der in der Fahrposition mindestens einen Passagiere umgibt, und mit mindestens ein Verriegelungsmittel ausgestattet ist, die so ausgelegt ist, dass sie einrastet, wenn sich die Schutzstruktur in der Fahrposition befindet, und sich nur durch manuelles Betätigen des Verriegelungsmittels entriegeln lässt.

2. Schutzstruktur nach Anspruch 1, die nach vorne schwenkbar angeordnet ist und Schwenkmittel umfasst, die vor dem oder den Passagier(e) positioniert sind.

3. Struktur nach Anspruch 1, die nach hinten schwenkbar angeordnet ist und Schwenkvorrichtungen umfasst, die hinter dem oder den Passagier(e) positioniert sind.

4. Struktur nach Anspruch 1, die seitlich schwenkbar angeordnet ist und Schwenkvorrichtungen umfasst, die an der Seite des oder der Passagier(e) positioniert sind.

5. Struktur nach einem der vorstehenden Ansprüche, bei welcher der Bügel in Fahrposition auch den Fahrer umgibt.

6. Schutzstruktur nach einem der vorstehenden Ansprüche, wobei die Verriegelungsmittel ein Schließblech, eine Clipschnalle, eine Magnetschnalle und/oder einen Karabinerhaken umfassen.

7. Schutzstruktur (a) nach einem der vorstehenden Ansprüche, auf der ein Verdeck befestigt ist, das mit dieser schwenkbar ist.

8. Schutzstruktur nach Anspruch 7, wobei das Verdeck eine Verdeckkonstruktion mit mindestens zwei starren vorderen Pfosten und eine Abdeckung umfasst, die die Verdeckkonstruktion zumindest teilweise abdeckt.

9. Schutzstruktur nach Anspruch 8, bei der die beiden starren vorderen Pfosten an ihrer Spitze durch einen Querträger miteinander verbunden sind.

10. Schutzstruktur nach Anspruch 8 oder 9, wobei die Verdeckkonstruktion auch hintere Teile aus flexiblerem Material umfasst.

11. Schutzstruktur nach einem der Ansprüche 7 bis 10, wobei die Abdeckung einen vorzugsweise wiederverschließbaren Schlitz an der Vorderseite des Verdecks aufweist.

12. Schutzstruktur (a) nach einem der vorstehenden Ansprüche, die an einem Zweiradfahrzeug angebracht ist.

## Claims

1. Protective structure (a) for passengers installed on the luggage rack of a bicycle with or without electric assistance, with one or two rear wheels, said structure being arranged to pivot between an open position for passenger installed and a closed position for riding, said structure comprising a restraint bar which, in the riding position, surrounds at least the passenger(s), and equipped with at least one locking means provided to engage when the protective structure is in the riding position and to unlock only by a manual action on the locking means.

2. Protective structure according to claim 1, provided to pivot forward and comprising pivot means positioned in front of the passenger(s).

3. Structure according to claim 1, provided to pivot rearwards, and comprising pivot means positioned behind the passenger(s).

4. Structure according to claim 1, provided to pivot laterally and comprising pivot means positioned to the side of the passenger.

5. Structure according to one of the preceding claims, wherein the restraint bar, in the riding position, also surrounds the driver.

6. Protective structure according to one of the preceding claims, wherein the locking means comprise a latch, a clip buckle, a magnetic buckle and/or a carabiner.

7. Protective structure (a) according to any of the preceding claims, on which a canopy is fixed which pivots with it.

8. Protective structure according to claim 7, wherein the canopy comprises a canopy structure having at least two rigid front uprights and a cover covering at least part of the canopy structure.

9. Protective structure according to claim 8, wherein the two rigid front uprights are connected to each other at their top by a crossbar.

10. Protective structure according to claim 8 or 9, wherein the structure of the canopy also comprises rear parts made of a more flexible material.

11. Protective structure according to one of claims 7 to 10, wherein the cover comprises a slit, preferably closable, on the front side of the canopy.

12. Protective structure (a) according to any of the preceding claims installed on a two-wheeled vehicle.
